# EUROPÄISCHE PATENTSCHRIFT

(11) **EP 3 923 702 B1**
(45) Veröffentlichungstag und Bekanntmachung des Hinweises auf die Patenterteilung: **07.06.2023**
(21) Anmeldenummer: 20700974.7
(22) Anmeldetag: 10.01.2020
(51) Int. Cl.: A01G 9/02

(54) **FASSADENELEMENT FÜR EINE GEBÄUDEWAND MIT PFLANZBEHÄLTNIS FÜR PFLANZEN, FASSADENSYSTEM SOWIE VERFAHREN ZUR NÄHRSTOFFVERSORGUNG VON PFLANZEN EINES FASSADENELEMENTS**
FACADE ELEMENT FOR A BUILDING WALL HAVING PLANT CONTAINER FOR PLANTS, FACADE SYSTEM AND METHOD FOR SUPPLYING NUTRIENTS TO PLANTS OF A FACADE ELEMENT
ÉLÉMENT DE FAÇADE POUR UNE PAROI DE BÂTIMENT COMPRENANT UN RÉCIPIENT POUR DES PLANTES, SYSTÈME DE FAÇADE, ET PROCÉDÉ D'APPORT DE NUTRIMENTS À DES PLANTES D'UN ÉLÉMENT DE FAÇADE

(30) Priorität: 14.02.2019 DE 102019201992
(43) Veröffentlichungstag der Anmeldung: 22.12.2021
(73) Patentinhaber: Deutsches Zentrum für Luft- und Raumfahrt e.V., 51147 Köln (DE)
(72) Erfinder: BORNEMANN, Gerhild, 53639 Königswinter (DE)
(74) Vertreter: dompatent von Kreisler Selting Werner - Partnerschaft von Patent- und Rechtsanwälten mbB
(86) Internationale Anmeldenummer: PCT/EP2020/050530
(87) Internationale Veröffentlichungsnummer: WO 2020/164822

(56) Entgegenhaltungen:
- WO-A1-2013/159738
- FR-A1- 2 902 602
- US-A1- 2015 289 452

## Beschreibung

Die vorliegende Erfindung betrifft ein Fassadenelement für eine Gebäudewand mit Pflanzbehältnis für Pflanzen sowie ein Verfahren zur Nährstoffversorgung von Pflanzen eines derartigen Fassadenelements.

Um die Luft- und Lebensqualität in Städten zu verbessern ist es bekannt, Fassaden zu begrünen. Hierbei werden Pflanzen in geeigneter Weise an einer Fassade befestigt.

Eine Methode besteht darin, am Boden der Fassade Kletterpflanzen vorzusehen, die an der Fassade oder geeigneten Gerüsten emporklettern. Derartige Pflanzen sind jedoch in Städten aufgrund mangelnder Pflanzflächen am Boden der Fassaden nicht möglich. Daher wurden Systeme entwickelt, bei denen Pflanzen direkt in entsprechende Aufnahmen in der Fassade gepflanzt werden. Eine derartige Fassade ist beispielsweise aus EP 2 946 655 B1 bekannt.

Problematisch bei derartigen begrünten Fassaden ist jedoch die Nährstoffversorgung von den Pflanzen. Hierfür werden häufig Mineraldünger verwendet, die energieaufwendig hergestellt werden müssen. Für die Bewässerung der Fassadenbegrünung wird darüber hinaus häufig hochwertiges Trinkwasser verwendet.

Grundsätzlich besteht auch ein Problem hinsichtlich Abwasserentsorgung. Die Entsorgung von Abwasser ist häufig mit hohen Kosten verbunden, sodass der Trend dazu geht, bestimmte Abwasser als Brauchwasser wiederzuverwenden, indem diese beispielsweise in Hauskläranlagen aufbereitet werden. Dadurch kann die abgeleitete Abwassermenge deutlich reduziert werden, wodurch auch die Kosten sinken. Insbesondere bei Wasserentsorgung, die nicht über eine Kanalisation erfolgt, ist dies von Vorteil, weil beispielsweise weniger Abwasser in Vorfluter geleitet wird. US 2015/289452 A1 offenbart ein Fassadenelement mit der Merkmalen des Oberbegriffs von Anspruch 1. Ein vergleichbares Fassadenelement ist aus FR 2 902 602 A1 bekannt.

Die Bereitstellung von einem verbesserten Fassadensystem für die Begrünung von Fassaden ist daher wünschenswert. Auch ist es wünschenswert, eine Möglichkeit für die Verringerung von Abwassermengen zu schaffen.

Es ist daher die Aufgabe der vorliegenden Erfindung, eine verbesserte Fassade mit Begrünung zu schaffen, die eines oder mehrere der genannten Probleme löst.

Das erfindungsgemäße Verfahren ist definiert durch die Merkmale des Anspruch 1.

Das erfindungsgemäße Fassadenelement für eine Gebäudewand weist mindestens ein Pflanzbehältnis zur Aufnahme von Pflanzen und ein mindestens einen ersten Raum bildendes Gehäuse auf. Der erste Raum weist an einem oberen Endbereich mindestens eine Einlassöffnung zum Einlass von Flüssigkeiten und an einem unteren Endbereich mindestens eine Auslassöffnung für Flüssigkeiten auf. Das mindestens eine Pflanzbehältnis steht mit dem mindestens einen ersten Raum in Flüssigkeitsverbindung. Die Erfindung ist dadurch gekennzeichnet, dass der erste Raum als flacher Raum ausgebildet ist, der sich im an der Gebäudewand angeordneten Zustand des Fassadenelements parallel zu der Gebäudewand erstreckt und dass in dem flachen Raum poröses Füllmaterial angeordnet ist, wobei das poröse Füllmaterial mit einem mikrobiellen Filmmaterial zur Verstoffwechslung von in der Flüssigkeit enthaltenen organischen Stoffen bedeckbar ist.

Im Rahmen der Erfindung wird als flacher Raum ein Raum verstanden, der sich in einer Raumrichtung wesentlich geringer erstreckt als in die anderen beiden Raumrichtungen. Der erfindungsgemäße erste Raum erstreckt sich somit im an der Gebäudewand angeordneten Zustand in eine Richtung orthogonal zu der Gebäudewand geringer als in die anderen beiden Raumrichtungen.

Durch das Vorsehen von porösem Füllmaterial, auf das ein mikrobielles Filmmaterial aufgebracht werden kann, besteht die Möglichkeit, in den ersten Raum als Flüssigkeit Abwasser, das organische Stoffe enthält, einzuleiten, sodass die Mikroorganismen des mikrobiellen Filmmaterials die in der Flüssigkeit enthaltenen organischen Stoffe abbauen. Durch die Verwendung von porösem Füllmaterial wird eine große Oberfläche bereitgestellt, auf der das mikrobielle Filmmaterial angesiedelt werden kann, wobei aufgrund der großen Oberfläche Sauerstoff, zum Beispiel aus der Luft, in ausreichendem Umfang an die Mikroorganismen des mikrobiellen Filmmaterials gelangen kann. Dadurch erfolgt im Wesentlichen ein aerober Abbau der organischen Stoffe. Bei der Umwandlung der organischen Stoffe entstehen somit keine wahrnehmbaren unangenehmen Gerüche.

Bei dem Abbau bzw. der Umwandlung der organischen Stoffe entstehen insbesondere über Mineralisierung durch die Mikroorganismen Nährsalze und/oder Nährstoffe, die in die Flüssigkeit gelangen. Beispielsweise kann über Nitrifikation Nitrat entstehen Dadurch, dass die Pflanzbehältnisse mit dem mindestens einen ersten Raum in Flüssigkeitsverbindung stehen, kann die Flüssigkeit, die Nährsalze/-stoffe aufgenommen hat, in die Pflanzbehältnisse gelangen, sodass diese für die Versorgung von in den Pflanzbehältnissen aufgenommenen Pflanzen verwendet werden kann.

Vorzugsweise ist vorgesehen, dass das Fassadenelement außen an einer Gebäudewand angeordnet werden kann. Bei dem erfindungsgemäßen Fassadenelement kann vorgesehen sein, dass der flache Raum als langegestreckter Raum ausgebildet ist, der die größte Erstreckung in vertikaler Richtung besitzt. Dadurch wird erreicht, dass Flüssigkeit, die in den ersten Raum eingeleitet wird, auf dem Weg von der Einlassöffnung zu der Auslassöffnung eine möglichst lange Wegstrecke durch das poröse Füllmaterial fließt und somit in der Flüssigkeit enthaltene organische Stoffe in hohem Maße abgebaut werden können.

Das Gehäuse kann beispielsweise direkt auf die Gebäudewand aufgesetzt sein, wobei auch vorgesehen sein kann, dass die Gebäudewand den mindestens einen ersten Raum an einer Seite begrenzt. Mit anderen Worten: Das Gehäuse kann im von der Gebäudewand gelösten Zustand an einer Seite offen sein und der erste Raum wird erst durch das Aufsetzen des Gehäuses auf die Gebäudewand (mit Ausnahme der Einlass- bzw. Auslassöffnung) geschlossen. Dabei kann vorgesehen sein, dass die Gebäudewand eine dem ersten Raum zugewandte Schicht aufweist, die einen Flüssigkeitseintritt in die Gebäudewand oder einen Flüssigkeitsdurchtritt durch die Gebäudewand verringert oder ausschließt.

Das poröse Füllmaterial kann beispielsweise mineralisch sein.

Es kann vorgesehen sein, dass das poröse Füllmaterial Vulkangestein und/oder ein Tonmaterial ist, wobei das Füllmaterial vorzugsweise Schüttgut ist. Ein derartiges Material hat sich für das erfindungsgemäße Fassadenelement als besonders vorteilhaft herausgestellt. Darüber hinaus sind Vulkangestein und die meisten Tonminerale kostengünstig erhältlich und weisen eine große Oberfläche auf. Durch das Vorsehen von Füllmaterial in Form von Schüttgut ist darüber eine besonders große Oberfläche bereitstellbar, wobei auch ein Austausch des Füllmaterials in dem erfindungsgemäßen Fassadenelement in vorteilhafter Weise gewährleistet ist.

Es kann vorgesehen sein, dass das poröse Füllmaterial eine Porosität zwischen 35 % und 70 % besitzt. Unter Porosität wird das Verhältnis von Hohlraumvolumen zu Gesamtvolumen verstanden.

Erfindungsgemäß kann vorgesehen sein, dass in dem Pflanzbehältnis ein Trägerkörper für Pflanzen, beispielsweise Mineralwolle oder Glaswolle oder ein Pflanzsubstrat für die Pflanzen angeordnet ist.

Es können auch mehrere Pflanzbehältnisse vorgesehen sein, die jeweils mit dem ersten Raum in Flüssigkeitsverbindung stehen und in jedem Pflanzbehältnis ein Trägerkörper oder Pflanzsubstrat für die Pflanzen aufgenommen ist. Die genannten Trägerkörper haben sich als besonders vorteilhaft für Pflanzen herausgestellt, da die Wurzeln der Pflanzen derartige Trägerkörper in vorteilhafter Weise durchdringen.

Es kann auch vorgesehen sein, dass das Pflanzbehältnis durch einen zweiten Raum in dem Gebäude gebildet ist, wobei in dem zweiten Raum ein oder mehrere Trägerkörper oder Pflanzsubstrat für die Pflanzen angeordnet sind bzw. ist, wobei eine Begrenzungswand des zweiten Raumes mehrere Pflanzöffnungen für die Pflanzen bildet. Bei dem erfindungsgemäßen Fassadenelement kann somit vorgesehen sein, dass die Pflanzen in Pflanzöffnungen einer Begrenzungswand des zweiten Raumes angeordnet werden, sodass sich die Wurzeln der Pflanzen in einem gemeinsamen Raum befinden, jedoch die Pflanzen einzeln aus den Pflanzöffnungen herausragen.

Gemäß der Erfindung ist vorgesehen, dass zwischen dem ersten Raum und dem mindestens einen Pflanzbehältnis eine poröse Schicht angeordnet ist. Diese ermöglicht, dass die Flüssigkeit mit den gebildeten Nährsalzen/-stoffen auf einfache Art und Weise durch die poröse Schicht in das oder die Pflanzbehältnisse gelangen kann und somit die in den Pflanzbehältnissen aufgenommenen Pflanzen versorgen kann.

Dabei ist vorgesehen, dass an dem mindestens einen ersten Raum angrenzend ein Zwischenraum gebildet ist, der zu dem ersten Raum hin und zu dem mindestens einen Pflanzbehältnis hin jeweils von einer die Flüssigkeit durchlassenden Wand begrenzt ist, wobei die poröse Schicht in dem Zwischenraum angeordnet ist.

Die Erfindung betrifft ferner ein Fassadensystem mit mindestens einem Fassadenelement.

Bei dem erfindungsgemäßen Fassadensystem kann eine Rückspülvorrichtung für ein Spülmedium, das entgegen der Fließrichtung der Flüssigkeit in den mindestens einen ersten Raum des mindestens einen Fassadenelements einleitbar ist, vorgesehen sein. Das Spülmedium kann beispielweise ein Wasser-Luft-Gemisch sein. Über das Spülmedium können Verblockungen in dem porösen Füllmaterial gelöst werden.

Erfindungsgemäß kann vorgesehen sein, dass das Fassadensystem eine Anlage zur anaeroben Fermentierung von Abwasser zu Flüssigkeit mit organischen Stoffen aufweist, wobei die Flüssigkeit mit organischen Stoffen dem mindestens einen Fassadenelement zuführbar ist. Gemäß dem erfindungsgemäßen Fassadensystem wird somit das mindestens eine erfindungsgemäße Fassadenelement mit einer Anlage zur Fermentierung des Abwassers kombiniert. Diese Anlage kann beispielsweise in dem Gebäude, an dessen Gebäudewand das mindestens eine erfindungsgemäße Fassadenelement angeordnet ist, angeordnet sein. Grundsätzlich ist es auch möglich, dass die Anlage zur anaeroben Fermentierung von Abwasser zentral für mehrere Gebäude vorgesehen ist, und Fassadenelemente an unterschiedlichen Gebäuden von der Anlage zur anaeroben Fermentierung von Abwasser mit Flüssigkeit mit organischen Stoffen versorgt werden.

Die Anlage zur anaeroben Fermentierung von Abwasser kann beispielsweise eine Biogasanlage sein. Zusätzlich oder alternativ kann vorgesehen sein, dass eine Anlage zur Vorklärung das Abwasser aufbereitet, bevor es dem mindestens einen Fassadenelement und/oder der Biogasanlage zugeführt wird.

Das erfindungsgemäße Fassadensystem kann auch mehrere erfindungsgemäße Fassadenelemente aufweise, wobei in einer Gruppe von Fassadenelementen jeweils eine Auslassöffnung eines der Fassadenelemente mit der Einlassöffnung eines anderen Fassadenelements der Gruppe verbunden ist. Mit anderen Worten: Die Fassadenelemente können übereinander angeordnet sein, sodass die Auslassöffnung eines Fassadenelements in die Einlassöffnung des darunterliegenden Fassadenelements mündet. Somit kann die Flüssigkeit mit organischen Stoffen mehrere der Fassadenelemente durchfließen. Auf diese Weise ist es möglich, dass die erfindungsgemäßen Fassadenelemente in einer für die Montage vorteilhaften Größe herstellbar sind und dennoch im Betrieb die Flüssigkeit mit organischen Stoffen eine ausreichende Wegstrecke durch das poröse Füllmaterial fließt, um einen vorteilhaften Abbau der organischen Stoffe zu gewährleisten. Es kann auch vorgesehen sein, dass nach dem Durchlaufen der Flüssigkeit mit organischen Stoffen durch ein oder mehrere Fassadenelemente die Flüssigkeit über eine Rückführleitung einem oder mehreren Fassadenelementen wieder zugeführt wird. Hierzu können beispielweise separate Einlassöffnungen oder Auslassöffnungen an einem oder mehreren Fassadenelementen vorgesehen sein. Durch das Vorsehen einer Rückführleitung kann ermöglicht werden, dass eine Flüssigkeit mit organischen Stoffen ein oder mehrere Fassadenelemente mehrfach durchläuft, sodass ein besonders hoher Abbau von organischen Stoffen erreicht werden kann.

Das erfindungsgemäße Fassadenelement bzw. das erfindungsgemäße Fassadensystem ermöglicht in vorteilhafter Weise eine Bewässerung und Nährstoffversorgung von Pflanzen, die zur Begrünung der Fassade dienen. Insbesondere wird vermieden, dass für die Wasserversorgung der Pflanzen der Fassadenbegrünung Trinkwasser verwendet werden muss. Auch eine Düngung mit industriell hergestelltem Dünger, der zusätzlich Kosten verursacht, kann vermieden werden, da der Dünger durch die Mikroorganismen aus dem Abwasser hergestellt wird. Ferner wird in vorteilhafter Weise Abwasser in Brauchwasser umgewandelt, sodass das Brauchwasser in einem Gebäude wiederverwendet werden kann. Dadurch wird die Menge des in eine Kanalisation einzuleitenden Abwassers reduziert.

Die Erfindung betrifft ferner ein Verfahren zur Nährstoffversorgung von Pflanzen eines an einer Gebäudewand angeordneten Fassadensystems in folgenden Schritten:
- Bereitstellen einer Flüssigkeit mit organischen Stoffen,
- Bereitstellen von mikrobiellem Filmmaterial auf dem porösen Füllmaterial,
- Aufnahme der Nährsalze und/oder Nährstoffe von in dem Pflanzbehältnis oder den Pflanzbehältnissen des Fassadensystems angeordneten Pflanzen.

Dabei ist vorgesehen, dass die Flüssigkeit mit organischen Stoffen aus Abwasser mittels einer Anlage zur anaeroben Fermentierung von Abwasser bereitgestellt wird. Die Anlage zur anaeroben Fermentierung von Abwasser kann beispielsweise eine Biogasanlage sein.

Erfindungsgemäß ist ferner vorgesehen, dass die Flüssigkeit mit organischen Stoffen durch Abwärme der Anlage zur anaeroben Fermentierung von Abwasser erwärmt wird, wobei die Wärme der Flüssigkeit mit organischen Stoffen an die Gebäudewand abgegeben wird. Mit anderen Worten. Der Flüssigkeit mit organischen Stoffen kann eine Wärmeenergie zugeführt werden, die diese beim Durchfließen des mindestens einen ersten Raumes des Fassadensystems an die Gebäudewand abgibt und somit die Gebäudewand und somit das Gebäude selbst beheizen kann. Die Erwärmung der Flüssigkeit mit organischen Stoffen kann selbstverständlich auch über eine andere Wärmeenergiequelle als die Anlage zur anaeroben Fermentierung von Abwasser erfolgen. Grundsätzlich ist es auch möglich, dass über die Flüssigkeit mit organischen Stoffen die Gebäudewand gekühlt wird, sodass beispielsweise in Sommermonaten eine angenehme Klimatisierung des Gebäudes erreicht werden kann.

Im Folgenden wird unter Bezugnahme auf die nachfolgenden Figuren die Erfindung näher erläutert. Es zeigen
- Figur 1: eine schematische Darstellung eines erfindungsgemäßen Fassadensystems mit mehreren erfindungsgemäßen Fassadenelementen und
- Figur 2: eine schematische Schnittdarstellung eines erfindungsgemäßen Fassadenelementes im an einer Gebäudewand angeordneten Zustand.

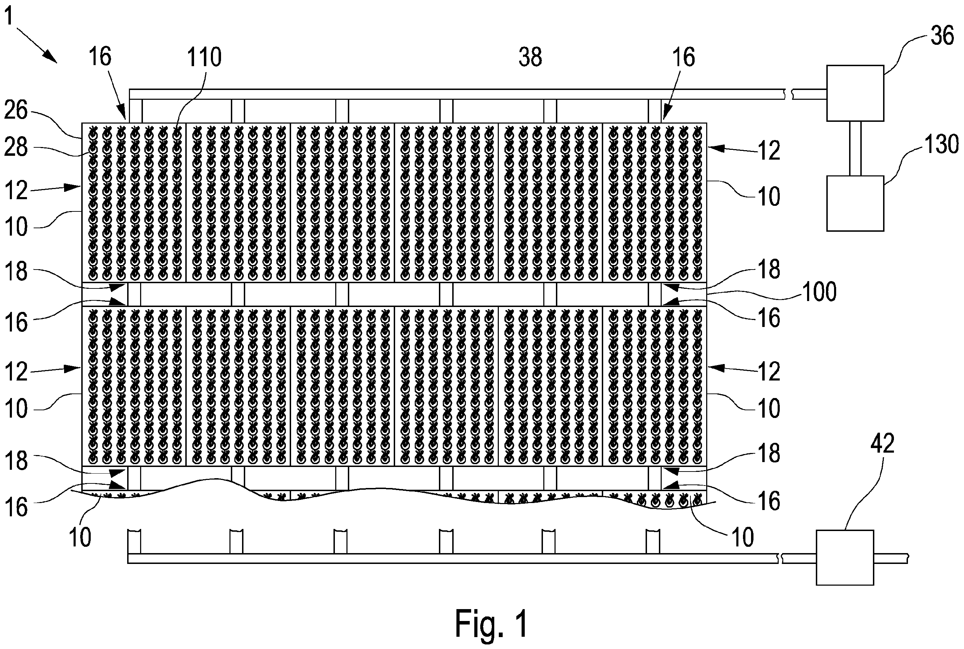

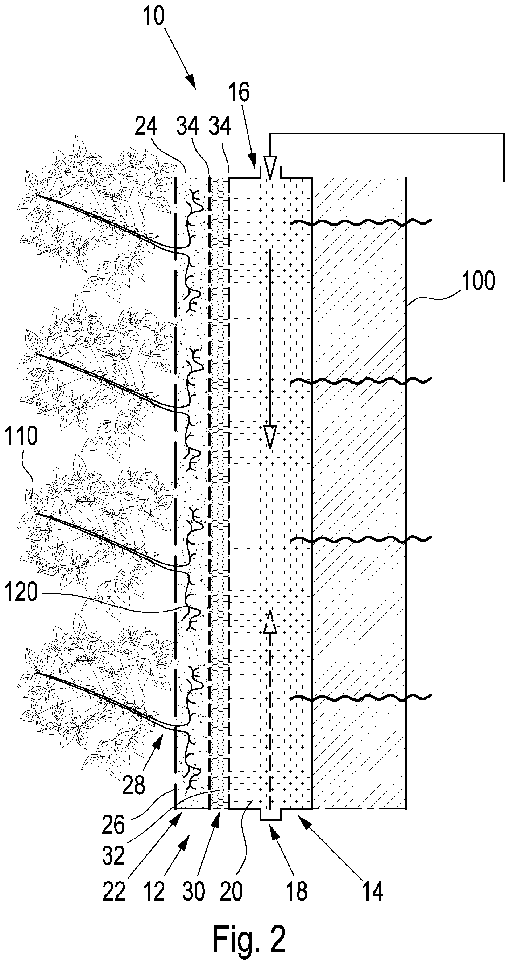

In Figur 1 ist ein erfindungsgemäßes Fassadensystem 1 in einem an eine Gebäudewand 100 angeordneten Zustand gezeigt. Das erfindungsgemäße Fassadensystem 1 weist eine Vielzahl von erfindungsgemäßen Fassadenelementen 10 auf. Die Fassadenelemente 10 weisen jeweils ein Gehäuse 12 auf, das, wie am besten aus Figur 2 ersichtlich ist, einen flachen Raum 14 bildet. Bei einem erfindungsgemäßen Fassadenelement 10 weist der erste Raum 14 an einem oberen Endbereich eine Einlassöffnung 16 auf, durch die eine Flüssigkeit mit organischen Stoffen in den ersten Raum 14 einleitbar ist. An einem unteren Ende weist der erste Raum 14 eine Auslassöffnung 18 auf, durch die die Flüssigkeit mit organischen Stoffen den ersten Raum 14 verlassen kann.

In dem ersten Raum 14 ist ein poröses Füllmaterial 20 angeordnet. An dem porösen Füllmaterial 20 kann sich ein mikrobielles Filmmaterial ansiedeln, das eine Verstoffwechslung der organischen Stoffe der Flüssigkeit vornehmen kann.

Das Gehäuse 12 umschließt den ersten Raum 14 an fünf Seiten. Auf der der Gebäudewand 100 zugewandten Seite wird der erste Raum 14 von der Gebäudewand 100 begrenzt.

Das Gehäuse 12 bildet ferner einen zweiten Raum 22, der ein Pflanzbehältnis bildet. In dem zweiten Raum 22 ist ein Pflanzsubstrat 24 angeordnet. Auf der Außenseite des Fassadenelements 10, das die von der Gebäudewand 100 abgewandte Seite ist, wird der zweite Raum 22 von einer Begrenzungswand 26 begrenzt, die mehrere Pflanzöffnungen 28 für Pflanzen 110 bildet. Die Pflanzen 110 ragen durch die Pflanzöffnung 28 nach draußen, wobei die Wurzeln 120 in dem Pflanzsubstrat 24 gehalten sind.

Der zweite Raum 22 steht mit dem ersten Raum 14 in Flüssigkeitsverbindung. Die organischen Stoffe in der Flüssigkeit werden von den Mikroorganismen des mikrobiellen Filmmaterials in Nährsalze und/oder Nährstoffe umgewandelt. Die Flüssigkeit transportiert die Nährsalze und/oder Nährstoffe zu den Wurzeln 120 der Pflanzen 110, sodass die Pflanzen 110 mit Nährstoffen und Wasser versorgt werden.

Der zweite Raum 22 ist hierfür von dem ersten Raum 14 durch einen Zwischenraum 30 begrenzt, in dem eine poröse Schicht 32 angeordnet ist. Der Zwischenraum 30 ist zu dem ersten Raum 14 hin und dem zweiten Raum 22 hin jeweils durch eine die Flüssigkeit durchlassende Wand 34 begrenzt.

Die Flüssigkeit mit organischen Stoffen kann beispielsweise aus Abwasser eines Gebäudes erzeugt werden. Das Abwasser des Gebäudes wird zunächst auf herkömmliche Weise in einem Abwassersammler 130 des Gebäudes gesammelt. Anschließend wird es in einer Anlage 36 zur anaeroben Fermentierung des Abwassers behandelt und die Flüssigkeit mit organischen Stoffen bereitgestellt. Diese wird über eine Verteilerleitung 38 den Fassadenelementen 10 zugeführt. Nach dem Durchlaufen der Fassadenelemente 10 wird die behandelte Flüssigkeit in Sammelrohren 40 gesammelt und kann als Brauchwasser in dem Gebäude verwendet werden. Es kann auch vorgesehen sein, dass über eine nicht dargestellte Rückführleitung zumindest ein Teil des gebildeten Brauchwassers erneut durch zumindest einige der Fassadenelemente 10 geleitet wird, um den Abbau von organischen Stoffen zu verbessern.

Das erfindungsgemäße Fassadensystem 1 weist ferner eine Rückspülvorrichtung 42 auf, mittels der ein Spülmedium entgegen der Flussrichtung der Flüssigkeit in den ersten Raum 14 des Fassadenelements 10 eingeleitet werden kann, um Verblockungen in dem porösen Füllmaterial 20 zu lockern. Die Flussrichtung, mit der das Spülmedium in den ersten Raum 14 eingeleitet werden kann, ist in Figur 2 durch einen gestrichelten Pfeil angedeutet.

Es kann auch vorgesehen sein, dass die Flüssigkeit mit organischen Stoffen durch die Anlage 36 zur anaeroben Fermentierung von Abwasser erwärmt wird, sodass, wie in Figur 2 durch Linien angedeutet ist, mittels der Flüssigkeit mit organischen Stoffen die Gebäudewand 100 und somit das dazugehörige Gebäude erwärmt werden kann.

## Patentansprüche

1. Fassadenelement (10) für eine Gebäudewand (100) mit mindestens einem Pflanzbehältnis zur Aufnahme von Pflanzen (110) und mit einem mindestens einen ersten Raum (14) bildenden Gehäuse (12), wobei der erste Raum (14) an einem oberen Endbereich mindestens eine Einlassöffnung (16) zum Einlass von Flüssigkeiten und an einem unteren Endbereich mindestens eine Auslassöffnung (18) für Flüssigkeiten aufweist, und wobei das mindestens eine Pflanzbehältnis mit dem mindestens einem ersten Raum (14) in Flüssigkeitsverbindung steht, wobei
der mindestens eine erste Raum (14) als flacher Raum ausgebildet ist, der sich im an der Gebäudewand (100) angeordneten Zustand des Fassadenelements (10) parallel zu der Gebäudewand (100) erstreckt, und dass in dem ersten Raum (14) poröses Füllmaterial (20) angeordnet ist, wobei das poröse Füllmaterial (20) mit einem mikrobiellen Filmmaterial zur Verstoffwechslung von in der Flüssigkeit enthaltenen organischen Stoffen bedeckbar ist,
**dadurch gekennzeichnet,**
**dass** zwischen dem ersten Raum (14) und dem mindestens einem Pflanzbehältnis eine poröse Schicht (32) angeordnet ist und dass an den mindestens einen ersten Raum (14) angrenzend ein Zwischenraum (30) gebildet ist, der zu dem ersten Raum (14) hin und zu dem mindestens einem Pflanzbehältnis hin jeweils von einer die Flüssigkeit durchlassenden Wand (34) begrenzt ist, wobei die poröse Schicht (32) in dem Zwischenraum (30) angeordnet ist.

2. Fassadenelement nach Anspruch 1, **dadurch gekennzeichnet, dass** das poröse Füllmaterial (20) mineralisch ist.

3. Fassadenelement nach Anspruch 2, **dadurch gekennzeichnet, dass** das poröse Füllmaterial (20) Vulkangestein und/oder ein Tonmineral ist, wobei das Füllmaterial (20) vorzugsweise Schüttgut ist.

4. Fassadenelement nach einem der Ansprüche 1 bis 3, **dadurch gekennzeichnet, dass** das poröse Füllmaterial (20) eine Porosität zwischen 35 % und 70 % besitzt.

5. Fassadenelement nach einem der Ansprüche 1 bis 4, **dadurch gekennzeichnet, dass** mehrere Pflanzbehältnisse vorgesehen sind, die jeweils mit dem ersten Raum (14) in Flüssigkeitsverbindung stehen, und in jedem Pflanzbehältnis ein Trägerkörper oder Pflanzsubstrat (24) für die Pflanzen (110) aufgenommen ist

6. Fassadenelement nach einem der Ansprüche 1 bis 4, **dadurch gekennzeichnet, dass** das Pflanzbehältnis durch einen zweiten Raum (22) in dem Gehäuse (12) gebildet ist, wobei in dem zweiten Raum (22) ein oder mehrerer Trägerkörper oder Pflanzsubstrat (22) für die Pflanzen (110) angeordnet sind bzw. ist, wobei eine Begrenzungswand (26) des zweiten Raumes (22) mehrere Pflanzöffnungen (28) für die Pflanzen (110) bildet.

7. Fassadensystem (1) mit mindestens einem Fassadenelement (10) nach einem der Ansprüche 1 bis 6.

8. Fassadensystem nach Anspruch 7, **gekennzeichnet, durch** eine Rückspülvorrichtung (42) für Spülmedium, das entgegen der Fließrichtung der Flüssigkeit in den mindestens einen ersten Raum (14) des mindestens einen Fassadenelements (10) einleitbar ist.

9. Fassadensystem nach Anspruch 7 oder 8, **gekennzeichnet, durch** eine Anlage (36) zur anaeroben Fermentierung von Abwasser zu der Flüssigkeit mit organischen Stoffen, wobei die Flüssigkeit mit organischen Stoffen dem mindestens einem Fassadenelement (10) zuführbar ist.

10. Fassadensystem nach einem der Ansprüche 7 bis 9, **gekennzeichnet, durch** mehrere Fassadenelemente (10), wobei in einer Gruppe von Fassadenelementen (10) jeweils eine Auslassöffnung (18) eines der Fassadenelemente (10) mit der Einlassöffnung (16) eines anderen Fassadenelements (10) der Gruppe verbunden ist.

11. Verfahren zur Nährstoffversorgung von Pflanzen eines an einer Gebäudewand angeordneten Fassadensystems (1) nach einem der Ansprüche 7 bis 10, mit folgenden Schritten:
- Bereitstellen einer Flüssigkeit mit organischen Stoffen,
- Bereitstellen von mikrobiellen Filmmaterial auf dem porösen Füllmaterial (20),
- Einleiten der Flüssigkeit mit organischen Stoffen durch die Einlassöffnung (16) in den mindestens einen ersten Raum (14) des Fassadensystems (1),
- wobei die Flüssigkeit mit organischen Stoffen nach dem Einleiten durch das poröse Füllmaterial (20) fließt und wobei das mikrobiellen Filmmaterial die organischen Stoffe zumindest teilweise in Nährsalze und/oder Nährstoffe umwandeln,
- Aufnahme der Nährsalze und/oder Nährstoffe von in dem Pflanzbehältnis oder den Pflanzbehältnissen des Fassadensystems angeordneten Pflanzen,
**dadurch gekennzeichnet,**
**dass** die Flüssigkeit mit organischen Stoffen aus Abwasser mittels einer Anlage zur anaeroben Fermentierung von Abwasser bereitgestellt wird und die Flüssigkeit mit organischen Stoffen durch Abwärme der Anlage zur anaeroben Fermentierung von Abwasser erwärmt wird, wobei die Wärme von der Flüssigkeit mit organischen Stoffen an die Gebäudewand abgegeben wird.

## Claims

1. Facade element (10) for a building wall (100)
having at least one plant container for accommodating plants (110) and having at least one housing (12) which forms a first space (14), wherein the first space (14) has, at an upper end region, at least one inlet opening (16) for introducing liquids and has, at a lower end region, at least one outlet opening (18) for liquids, and wherein the at least one plant container is in fluidic connection with the at least one first space (14), wherein
the at least one first space (14) is formed as a flat space, which, when the facade element (10) is arranged on the building wall (100), extends parallel to the building wall (100), and porous filling material (20) is arranged in the first space (14), the porous filling material (20) being able to be covered by a microbial film material for metabolization of organic substances contained in the liquid,
**characterized in that**
a porous layer (32) is arranged between the first space (14) and the at least one plant container, and **in that**, adjoining the at least one first space (14), an intermediate space (30) is formed which is delimited both towards the at least one first space (14) and towards the at least one plant container by a wall (34) allowing the liquid to pass therethrough, the porous layer (32) being arranged in the intermediate space (30).

2. Facade element according to claim 1, **characterized in that** the porous filling material (20) is mineral.

3. Facade element according to claim 2, **characterized in that** the porous filling material (20) is volcanic stone and/or a clay mineral, wherein the filling material (20) is preferably bulk material.

4. Facade element according to one of claims 1 to 3, **characterized in that** the porous filling material (20) has a porosity between 35% and 70%.

5. Facade element according to one of claims 1 to 4, **characterized in that** a plurality of plant containers is provided, each being in fluidic connection with the first space (14), and **in that** each plant container accommodates a carrier body or a plant substrate(24) for the plants (110).

6. Facade element according to one of claims 1 to 4, **characterized in that** the plant container is formed by a second space (22) in the housing (12), wherein one or a plurality of carrier bodies or plant substrates (24) for the plants (110) is arranged, wherein a limiting wall (26) of the second space (22) forms a plurality of planting openings (28) for the plants (110).

7. Facade system (1) having at least one facade element (10) according to one of claims 1 to 6.

8. Facade system according to claim 7, **characterized by** a backwash device (42) for a washing medium which can be introduced into the at least one first space (14) of the at least one facade element (10) in a direction opposite to the flowing direction of the liquid.

9. Facade system according to claim 7 or 8, **characterized by** a facility (36) for anaerobic fermentation of waste water into the liquid with organic substances, wherein the liquid with organic substances can be supplied to the at least one facade element (10).

10. Facade system according to one of claims 7 to 9, **characterized by** a plurality of facade elements (10), wherein, in a group of facade elements (10), an outlet opening (18) of one of the facade elements (10) is connected with the inlet opening (16) of another facade element (10) of the group, respectively.

11. Method for the nutritional supply of plants of a facade system (1) according to one of claims 7 to 10, arranged on a building wall, the method comprising the steps of:
- providing a liquid with organic substances,
- providing microbial film material on the porous filling material (20),
- introducing the liquid with organic substances through the inlet opening (16) into the at least one first space (14) of the facade system (1),
- wherein, after introduction, the liquid with organic substances flows through the porous filling material (20) and wherein the microbial film material converts the organic substances at least partly into nutrient salts and/or nutrients,
- absorption of the nutrient salts and/or nutrients by plants arranged in the plant container or the plant containers of the facade system,
**characterized in that**
the liquid with organic substances is provided from waste water by means of a facility for the anaerobic fermentation of waste water, and waste heat is used to heat the liquid with organic substances in the facility for the anaerobic fermentation of waste water, the heat being transferred from the liquid with organic substance to the building wall.

## Revendications

1. Élément de façade (10) pour une paroi de bâtiment (100)
doté d'au moins un contenant pour plante destiné à accueillir des plantes (110) et doté d'un boîtier (12) formant au moins un premier espace (14), dans lequel le premier espace (14) comporte au moins une ouverture d'admission (16) sur une zone d'extrémité supérieure pour l'admission de liquides et au moins une ouverture de sortie (18) sur une zone d'extrémité inférieure pour les liquides, et dans lequel l'au moins un contenant pour plante se trouve en communication fluidique avec l'au moins un premier espace (14), dans lequel l'au moins un premier espace (14) est réalisé comme espace plat, lequel s'étend parallèlement à la paroi de bâtiment (100) dans l'état disposé sur la paroi de bâtiment (100) de l'élément de façade (10), et en ce que du matériau de remplissage poreux (20) est disposé dans le premier espace (14), dans lequel le matériau de remplissage poreux (20) peut être revêtu d'un matériau de film microbien destiné à la métabolisation des substances organiques contenues dans le liquide,
**caractérisé**
**en ce qu'**une couche poreuse (32) est disposée entre le premier espace (14) et l'au moins un contenant pour plante et en ce qu'un espace intermédiaire (30) est formé comme adjacent au premier espace (14), délimité par rapport au premier espace (14) et par rapport à l'au moins un contenant pour plante respectivement par une paroi (34) perméable au liquide, dans lequel la couche poreuse (32) est disposée dans l'espace intermédiaire (30).

2. Élément de façade selon la revendication 1, **caractérisé en ce que** le matériau de remplissage poreux (20) est minéral.

3. Élément de façade selon la revendication 2, **caractérisé en ce que** le matériau de remplissage poreux (20) est de la roche volcanique et/ou un minéral argileux, dans lequel le matériau de remplissage poreux (20) est de préférence un solide en vrac.

4. Élément de façade selon l'une des revendications 1 à 3, **caractérisé en ce que** le matériau de remplissage poreux (20) possède une porosité entre 35 % et 70 %.

5. Élément de façade selon l'une des revendications 1 à 4, **caractérisé en ce que** plusieurs contenants pour plante sont prévus, lesquels se trouvent en communication fluidique avec le premier espace (14), et un corps porteur ou un substrat végétal (24) pour les plantes (110) est accueilli dans chacun des contenants pour plante.

6. Élément de façade selon l'une des revendications 1 à 4, **caractérisé en ce que** le contenant pour plante est formé par un deuxième espace (22) dans le boîtier (12), dans lequel un ou plusieurs corps porteur(s) ou substrat végétal (24) pour les plantes (110) est ou sont disposé (s) dans le deuxième espace (22), dans lequel une paroi de délimitation (26) du deuxième espace (22) forme plusieurs ouvertures de plante (28) pour les plantes (110).

7. Système de façade (1) doté d'au moins un élément de façade (10) selon l'une des revendications 1 à 6.

8. Système de façade selon la revendication 7, **caractérisé par** un dispositif de lavage à contre-courant (42) pour fluide de rinçage, lequel peut être introduit à contre-courant du liquide dans l'au moins un premier espace (14) de l'au moins un élément de façade (10).

9. Système de façade selon la revendication 7 ou 8, **caractérisé par** une installation (36) pour la fermentation anaérobie d'eaux usées en liquide contenant des substances organiques, dans lequel le liquide contenant des substances organiques peut alimenter l'au moins un élément de façade (10).

10. Système de façade selon l'une des revendications 7 à 9, **caractérisé par** plusieurs éléments de façade (10), dans lequel dans un groupe d'éléments de façade (10) une ouverture de sortie (18) d'un des éléments de façade (10) est respectivement reliée à l'ouverture d'admission (16) d'un autre élément de façade (10) du groupe.

11. Procédé d'apport de nutriments à des plantes d'un système de façade (1) selon l'une des revendications 7 à 10 disposé sur une paroi de bâtiment avec les étapes suivantes :
- préparation d'un liquide contenant des substances organiques,
- préparation d'un matériau de film microbien sur le matériau de remplissage poreux (20),
- introduction du liquide contenant des substances organiques à travers l'ouverture d'admission (16) dans l'au moins un premier espace (14) du système de façade (1),
- dans lequel le liquide contenant des substances organiques s'écoule à travers le matériau de remplissage poreux (20) après l'introduction et dans lequel le matériau de film microbien transforme les substances organiques au moins partiellement en sels nutritifs et/ou en nutriments,
- absorption des sels nutritifs et/ou des nutriments par des plantes disposées dans le(s) contenant(s) pour plante du système de façade, **caractérisé**
**en ce que** le liquide contenant des substances organiques est préparé à partir d'eaux usées au moyen d'une installation de fermentation anaérobie des eaux usées et le liquide contenant des substances organiques est chauffé par le dégagement de chaleur de l'installation de fermentation anaérobie, dans lequel la chaleur du liquide contenant des substances organiques est diffusée dans la paroi de bâtiment.
